# DEMANDE DE BREVET EUROPEEN

(11) **EP 1 101 520 A1**
(43) Date de publication de la demande: **23.05.2001**
(21) Numéro de dépôt: 00403182.9
(22) Date de dépôt: 16.11.2000
(51) Int. Cl.: B01D 39/08, B01D 39/16, B01D 39/20

(54) **Dispositif de filtration et procédé pour sa réalisation**

(30) Priorité: 17.11.1999 FR 9914421
(71) Demandeur: VALEO, 75017 Paris (FR)
(72) Inventeur: Guérin, Richard, 61100 Ronfeugerai (FR); Chenu, Manuelle, 61100 Flers de L'Orne (FR); Adamczak, Loic, 87110 Bosmie L'Aiguille (FR)
(74) Mandataire: Gamonal, Didier

(57) **Abrégé**

Le procédé de réalisation, selon l'invention, d'un dispositif de filtration plus particulièrement destiné à la filtration de gaz tel que l'air destiné à l'aération et/ou au chauffage et/ou à la climatisation de locaux ou de véhicules automobiles, comprend une opération de cardage de fibres pour former un voile de carde, la réalisation d'un mat de fibres de même nature que celle des fibres du voile de carde et la juxtaposition dudit voile de carde et dudit mat.

Le dispositif de filtration selon l'invention comporte ainsi un voile de carde et un mat, les fibres du voile et celles du mat étant de même nature.

## Description

La présente invention a pour objet un procédé de réalisation d'un dispositif de filtration plus particulièrement destiné à la filtration de gaz tel que l'air destiné à l'aération et/ou au chauffage et/ou à la climatisation de locaux ou de véhicules automobiles.

L'invention a également pour objet un dispositif de filtration ainsi réalisé.

Des dispositifs de filtration de l'état de la technique sont réalisés en procédant au filage d'un polymère thermoplastique au travers de buses, de telle sorte qu'il se produise un entremêlement des filaments issus des buses, formant, après refroidissement, une nappe susceptible de constituer un filtre à particules.

Les procédés connus présentent l'inconvénient de nécessiter de superposer et lier plusieurs couches afin d'obtenir des filtres suffisamment efficaces.

Les filtres ainsi obtenus présentent une densité importante et sont d'un prix de revient élevé.

Le document FR-A-2 761 901 décrit un dispositif de filtration moins dense et plus économique que ceux de l'état de la technique cités ci-dessus ainsi que le procédé de réalisation d'un tel dispositif de filtration, lequel procédé comprend une opération de cardage de fibres pour former un voile de carde.

Selon d'autres caractéristiques du procédé selon ce document, qui peuvent être prises indépendamment ou dans toutes leurs combinaisons techniquement possibles :
- l'opération de cardage est réalisée au moyen d'une carde de type laine ;
- ladite carde comporte des brouilleurs de type "pêle-mêle" ;
- le voile est, en sortie de carde, introduit dans un condenseur pour former une nappe ;
- la nappe est soumise à une opération de consolidation mécanique au moyen d'un liage hydraulique suivi d'une opération de séchage.

Le dispositif de filtration selon le document précité comporte donc un voile de carde.

Selon d'autres caractéristiques de ce dispositif de filtration, qui peuvent être prises indépendamment ou dans toutes leurs combinaisons techniquement possibles :
- ledit voile de carde comporte une nappe unique ;
- ledit voile de carde comporte des fibres longues ;
- la longueur desdites fibres est au moins égale à 38 mm ;
- la longueur desdites fibres est au plus égale à 120 mm ;
- le diamètre moyen desdites fibres est au moins égal à 10 µm ;
- lesdites fibres sont choisies parmi le groupe des fibres thermoplastiques telles que les fibres de polypropylène, de polyéthylène, de polyester, de polycarbonate, de polyamide.

Un tel dispositif de filtration est efficace, d'un prix de revient moins élevé, et d'une densité plus faible que les dispositifs de filtration de l'état de la technique.

Un autre avantage important par rapport à l'état de la technique est que la perte de charge présentée lors du passage d'un gaz à travers un tel dispositif de filtration est nettement plus faible.

La présente invention a pour but de proposer un procédé de réalisation d'un dispositif de filtration plus efficace que celui décrit dans le document FR-A-2 761 901 tout en étant également d'un bas prix de revient et de faible densité.

Suivant l'invention, un procédé de réalisation d'un dispositif de filtration plus particulièrement destiné à la filtration de gaz tel que l'air destiné à l'aération et/ou au chauffage et/ou à la climatisation de locaux ou de véhicules automobiles, lequel procédé comprend une opération de cardage de fibres pour former un voile de carde, est caractérisé par le fait qu'il comprend en outre la réalisation d'un mat de fibres de même nature que celle des fibres du voile de carde et la juxtaposition dudit voile de carde et dudit mat.

De préférence, le mat est un non tissé réalisé par une opération dite de fusion-soufflage qui consiste à faire passer dans une filière des granulés fondus, à faire tomber les fils obtenus sur un cylindre tandis qu'est projeté transversalement un courant d'air frais et à récupérer en vrac sur un tapis les fibres ainsi coupées dont la longueur et le diamètre sont quelconques.

L'invention a donc pour objet également un dispositif de filtration, plus particulièrement destiné à la filtration de gaz tel que l'air destiné à l'aération et/ou au chauffage et/ou à la climatisation de locaux ou de véhicules automobiles, comportant un voile de carde, caractérisé par le fait qu'il comporte en outre un mat, les fibres du voile et celles du mat étant de même nature.

De préférence, la masse spécifique du voile de carde est comprise entre 20 et 150 grammes par mètre carré et celle du mat entre 3 et 40 grammes par mètre carré.

Avantageusement, lesdites fibres sont choisies parmi le groupe des fibres thermoplastiques telles que les fibres de polypropylène, de polyéthylène, de polyester, de polycarbonate, de polyamide.

D'autres aspects et avantages de l'invention apparaîtront dans la description ci-après d'exemples de réalisation d'un dispositif de filtration destiné à être placé dans un appareil de chauffage/climatisation de véhicule automobile.

Des fibres de polypropylène d'une finesse de 1,7 dtex (diamètre 14 µm) sont coupées à une longueur de 40 mm puis introduites dans un mélangeur.

Le mélange de fibres obtenu est ensuite cardé au moyen d'une carde de type laine à double peigneur équipée d'un brouilleur de type pêle-mêle afin d'obtenir un voile de carde isotrope.

Le voile est, en sortie de carde, introduit dans un condenseur pour former une nappe.

Les paramètres de la carde et du condenseur sont choisis de manière à obtenir une nappe présentant une masse surfacique d'environ 20 à environ 150 g/m².

La nappe est déposée sur un tapis puis consolidée par une opération de liage hydraulique. L'opération de liage hydraulique consiste à faire traverser la nappe disposée sur un tambour rotatif par des jets d'eau très fins sous haute pression (40 à 200 bars).

En rebondissant sur le tambour, les jets d'eau provoquent un nouage des fibres conférant à la nappe une résistance mécanique importante sans pour autant en augmenter, de manière conséquente, la densité.

Après séchage, la nappe est montée sur un support.

De la sorte, avec une nappe de 0,84 mm d'épaisseur, on a pu former un voile présentant une masse surfacique de 66 g/m² et de densité 0,07.

Le procédé décrit ci-dessus se déroule en continu et permet d'obtenir le voile de carde en une seule opération.

Pour tester l'efficacité du voile ainsi réalisé, on a placé ce dernier en travers d'une veine de section égale à 100 cm², parcourue par un courant d'air chargé de particules à une vitesse de 20 cm/s.

Les particules correspondent à une poudre dite "poudre SAE fine" qui est définie par la norme des Etats-Unis d'Amérique, référence SAE J 726 / ISO 5011 et qui est l'équivalent d'une poussière calibrée à 0,5 µm.

La concentration de particules est de 100 mg/m³.

On constate, d'une part, que la perte de charge au travers du voile n'est, dans ces conditions, que de 14 Pa et que, d'autre part, l'efficacité atteint 80 %.

Selon l'invention, on prépare un mat de fibres de même nature que celle des fibres du voile de carde et on juxtapose ledit voile de carde et ledit mat.

Avantageusement, le mat est un non tissé fondu-soufflé.

De préférence, le dispositif de filtration ainsi réalisé comprend un voile de carde dont la masse surfacique est comprise entre 20 et 150 grammes par mètre carré, et un mat dont la masse surfacique est comprise entre 3 et 40 grammes par mètre carré.

Avantageusement, le diamètre des fibres du mat est compris entre 1 et 10 microns.

Un premier dispositif de filtration a été réalisé dans lequel le voile de carde était constitué de fibres polypropylène de 2,8 dtex de 40 mm de longueur et diamètre 20 µm, sa masse surfacique étant de 40 g/m² ; il était associé à un mat dont les fibres en polypropylène avaient une longueur de 1 à 20 mm et un diamètre moyen de 5 µm, sa masse surfacique étant également de 40 g/m².

On a constaté qu'un tel dispositif de filtration conduisait à une perte de charge de 20 Pa pour une efficacité de 90 % à l'égard d'une poussière calibrée à 0,5 µm.

Un deuxième dispositif de filtration a été réalisé dans lequel le voile de carde était constitué de fibres polypropylène de 2,8 dtex de 40 mm de longueur et diamètre 15 µm, sa masse surfacique étant de 80 g/m² ; il était associé à un mat dont les fibres en polypropylène avaient une longueur de 1 à 20 mm et un diamètre moyen de 5 µm, sa masse surfacique étant de 20 g/m².

On a constaté qu'un tel dispositif de filtration conduisait à une perte de charge de 15 Pa pour une efficacité de 85 % à l'égard d'une poussière calibrée à 0,5 µm.

Un troisième dispositif de filtration a été réalisé dans lequel le voile de carde était constitué de fibres polypropylène de 2,8 dtex de 40 mm de longueur et diamètre 12 µm, sa masse surfacique étant de 150 g/m² ; il était associé à un mat dont les fibres en polypropylène avaient une longueur de 1 à 20 mm et un diamètre moyen de 5 µm, sa masse surfacique étant de 3 g/m².

On a constaté qu'un tel dispositif de filtration conduisait à une perte de charge de 12 Pa pour une efficacité de 82 % à l'égard d'une poussière calibrée à 0,5 µm.

Comme on le voit, l'efficacité du dispositif de filtration selon l'invention est supérieure à celle du voile de carde seul.

Par rapport aux dispositifs de filtration actuellement sur le marché, on a obtenu une efficacité comparable aux meilleurs d'entre eux avec un produit d'une densité beaucoup plus faible (0,07 contre 0,12 à 0,30) et engendrant une perte de charge nettement plus faible.

Des tests d'endurance ont en outre démontré une plus grande stabilité dans le temps de l'efficacité du dispositif de filtration.

Dans les exemples ci-dessus, le voile de carde avait une épaisseur de l'ordre de 0,84 mm et le mat une épaisseur de l'ordre de 0,16 mm.

Compte tenu de cela, et comme connu en soi, le dispositif de filtration, dont l'épaisseur est de l'ordre du millimètre, est associé à une grille, dite de maintien de forme, qui soutient le dispositif de filtration en association avec un cadre support ; généralement, le dispositif de filtration est de forme ondulée, en W ou en accordéon. Ici, le mat est disposé entre le voile de carde et la grille ; on peut fixer le mat au voile ou à la grille ; on préfère fixer le mat à la grille, ce qui permet, avec les mêmes composants, de réaliser un dispositif de filtration selon le document FR-A-2 761 901 ou selon la présente invention.

## Revendications

1. Procédé de réalisation d'un dispositif de filtration plus particulièrement destiné à la filtration de gaz tel que l'air destiné à l'aération et/ou au chauffage et/ou à la climatisation de locaux ou de véhicules automobiles, lequel procédé comprend une opération de cardage de fibres pour former un voile de carde, caractérisé par le fait qu'il comprend en outre la réalisation d'un mat de fibres de même nature que celle des fibres du voile de carde et la juxtaposition dudit voile de carde et dudit mat.

2. Procédé selon la revendication 1, caractérisé par le fait que l'opération de cardage est réalisée au moyen d'une carde de type laine.

3. Procédé selon la revendication 2, caractérisé par le fait que ladite carde comporte des brouilleurs de type "pêle-mêle".

4. Procédé selon l'une des revendications 1 à 3, caractérisé par le fait que le voile de carde est, en sortie de carde, introduit dans un condenseur pour former une nappe.

5. Procédé selon l'une quelconque des revendications précédentes, caractérisé par le fait que la nappe est soumise à une opération de consolidation mécanique au moyen d'un liage hydraulique suivi d'une opération de séchage.

6. Procédé selon la revendication 5, caractérisé par le fait que le liage hydraulique consiste à faire traverser la nappe disposée sur un tambour rotatif par des jets d'eau très fins sous haute pression (40 à 200 bars).

7. Procédé selon l'une des revendications 1 à 6, caractérisé par le fait que le mat est réalisé par fusion-soufflage.

8. Dispositif de filtration plus particulièrement destiné à la filtration de gaz tel que l'air destiné à l'aération et/ou au chauffage et/ou à la climatisation de locaux ou de véhicules automobiles, comportant un voile de carde, caractérisé par le fait qu'il comporte en outre un mat, les fibres du voile et celles du mat étant de même nature.

9. Dispositif de filtration selon la revendication 8, caractérisé par le fait que le voile de carde comporte une nappe unique.

10. Dispositif de filtration selon l'une des revendications 8 ou 9, caractérisé par le fait que le voile de carde comporte des fibres longues.

11. Dispositif de filtration selon la revendication 10, caractérisé par le fait que la longueur desdites fibres est au moins égale à 38 mm.

12. Dispositif de filtration selon la revendication 11, caractérisé par le fait que la longueur desdites fibres est au plus égale à 120 mm.

13. Dispositif de filtration selon l'une quelconque des revendications 8 à 12, caractérisé par le fait que le diamètre moyen desdites fibres est au moins égal à 10 µm.

14. Dispositif de filtration selon l'une quelconque des revendications 8 à 13, caractérisé par le fait que la masse surfacique du voile de carde est comprise entre 20 et 150 grammes par mètre carré et celle du mat entre 3 et 40 grammes par mètre carré.

15. Dispositif de filtration selon l'une des revendications 8 à 14, caractérisé par le fait que les fibres du mat ont un diamètre compris entre 1 et 10 microns.

16. Dispositif de filtration selon l'une des revendications 8 à 15, caractérisé par le fait qu'il comporte une grille de maintien de forme, le mat étant disposé entre le voile de carde et la grille.

17. Dispositif de filtration selon la revendication 16, caractérisé par le fait que le mat est solidaire de la grille.

18. Dispositif de filtration selon l'une des revendications 8 à 17, caractérisé par le fait que lesdites fibres sont choisies parmi le groupe des fibres thermoplastiques telles que les fibres de polypropylène, de polyéthylène, de polyester, de polycarbonate, de polyamide.
